# EUROPÄISCHE PATENTANMELDUNG

(11) **EP 4 299 221 A1**
(43) Veröffentlichungstag der Anmeldung: **03.01.2024**
(21) Anmeldenummer: 22181712.5
(22) Anmeldetag: 28.06.2022
(51) Int. Cl.: B23B 51/10, B23B 51/00, F16B 33/00

(54) **METALLBOHRER UND VERFAHREN**

(71) Anmelder: Hilti Aktiengesellschaft, 9494 Schaan (LI)
(72) Erfinder: Wettstein, Andreas, 6800 Feldkirch (AT); Doherty, Pauric, 6800 Feldkirch (AT); Niesutta, Pablo, 9470 Buchs (CH); Janssen, Elise, 6800 Feldkirch (AT)
(74) Vertreter: Hilti Aktiengesellschaft Corporate Intellectual Property

(57) **Zusammenfassung**

Bohrer (10) zum handgeführten Bohren eines Sacklochs mit einem Sacklochdurchmesser und einer Sacklochtiefe in ein Werkstück aus Metall, umfassend einen Schaft (20), welcher eine Bohrrichtung (30) definiert und eine in der Bohrrichtung orientierte Drehachse aufweist, wobei der Schaft an seinem in die Bohrrichtung weisenden Ende eine Schneidkante (50) und in einem die Sacklochtiefe definierenden und entgegen die Bohrrichtung gemessenen Abstand zur Schneidkante eine Anschlagschulter (55) aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen sich entgegen die Bohrrichtung an die Anschlagschulter anschliessenden ersten Schaftabschnitt (40) aufweist, welcher bis an die Anschlagschulter heranreicht und in welchem sich der Hüllkreisdurchmesser, ausgehend von der Anschlagschulter, entgegen die Bohrrichtung vergrössert.

## Beschreibung

Die vorliegende Erfindung betrifft einen Bohrer zum handgeführten Bohren eines Sacklochs in ein Werkstück aus Metall.

Es sind Bohrer bekannt, welche einen eine Bohrrichtung definierenden Schaft mit einer Schneidkante und einer Anschlagschulter aufweisen, deren Abstand zueinander eine Sacklochtiefe definiert. Üblicherweise weist die Anschlagschulter eine Kante auf, welche in einer unter Umständen vorhandenen Deckschicht eines Werkstücks ein Loch mit einem scharfkantigen Rand erzeugt. Ein Dichtring, welcher gegebenenfalls später das Loch abdecken soll, kann von dem Rand beschädigt werden.

Der Erfindung liegt die Aufgabe zu Grunde, einen Bohrer zur Verfügung zu stellen, mit dem die Gefahr der Beschädigung eines Dichtelements reduziert ist.

Die Aufgabe ist gelöst bei einem Bohrer zum handgeführten Bohren eines Sacklochs mit einem Sacklochdurchmesser und einer Sacklochtiefe in ein Werkstück aus Metall, umfassend einen Schaft, welcher eine Bohrrichtung definiert und eine in der Bohrrichtung orientierte Drehachse aufweist, wobei der Schaft an seinem in die Bohrrichtung weisenden Ende eine Schneidkante und in einem die Sacklochtiefe definierenden und entgegen die Bohrrichtung gemessenen Abstand zur Schneidkante eine Anschlagschulter aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen sich entlang der Drehachse ändernden Hüllkreisdurchmesser aufweist, welcher an der Anschlagschulter grösser als der Sacklochdurchmesser ist, wobei der Schaft einen sich entgegen die Bohrrichtung an die Anschlagschulter anschliessenden ersten Schaftabschnitt aufweist, welcher bis an die Anschlagschulter heranreicht und in welchem sich der Hüllkreisdurchmesser, ausgehend von der Anschlagschulter, entgegen die Bohrrichtung vergrössert, bevorzugt stetig vergrössert. Bevorzugt weist der Schaft an seinem in die Bohrrichtung weisenden Ende zwei oder mehr Schneidkanten auf, welche durch Drehung um die Drehachse den Sacklochdurchmesser gemeinsam definieren und besonders bevorzugt symmetrisch um die Drehachse angeordnet sind.

Ein Hüllkreisdurchmesser im Sinne der Erfindung ist der Durchmesser des kleinstmöglichen Kreises, welcher mit einem Kreismittelpunkt auf der Drehachse den Schaft noch vollständig umhüllt. Mit anderen Worten, für jeden Punkt entlang der Drehachse ist die Kreisfläche des Hüllkreises ist die Fläche, welche der Schaft bei Drehung um die Drehachse überdeckt. Bei einer kreisförmigen Umfangslinie ist der Hüllkreisdurchmesser gleich dem Durchmesser der Umfangslinie, also dem Schaftdurchmesser. Abweichungen der Umfangslinie von der Kreisform nach innen beeinflussen den Hüllkreisdurchmesser nicht, Abweichungen nach aussen vergrössern dagegen den Hüllkreisdurchmesser.

Bei einer bevorzugten Ausführungsform weist der Schaft an seinem in die Bohrrichtung weisenden Ende eine Zentrierspitze auf, durch welche die Drehachse verläuft.

Bei einer bevorzugten Ausführungsform weist die Anschlagschulter eine senkrecht zur Drehachse ausgerichtete und in die Bohrrichtung weisende Anschlagfläche auf.

Bei einer bevorzugten Ausführungsform weist der Schaft an seinem entgegen die Bohrrichtung weisenden Ende einen Befestigungsabschnitt für eine vorübergehende Befestigung an einer handgeführten Bohrmaschine auf. Besonders bevorzugt ist der Befestigungsabschnitt als Einsteckende ausgebildet.

Bei einer bevorzugten Ausführungsform weist der erste Abschnitt eine konische Form auf. Ein Öffnungswinkel der konischen Form beträgt bevorzugt mindestens 60°, besonders bevorzugt mindestens 90° oder mindestens 120°.

Bei einer bevorzugten Ausführungsform erstreckt sich der erste Abschnitt entlang der Drehachse über mindestens 0,5 mm, bevorzugt mindestens 1,0 mm, besonders bevorzugt mindestens 1,5 mm oder mindestens 2,0 mm.

Die Aufgabe ist ebenfalls gelöst bei einem Verfahren zum Befestigen eines Befestigungselements an einem Werkstück, bei dem ein eine Deckschicht aufweisendes Werkstück und ein Bohrer wie oben ausgeführt zur Verfügung gestellt werden, ein Sackloch durch die Deckschicht hindurch in das Werkstück mittels des Bohrers gebohrt wird, wobei der erste Schaftabschnitt des Bohrers ein sich entgegen der Bohrrichtung vergrösserndes Loch in der Deckschicht erzeugt, wobei weiterhin ein ein Dichtelement aufweisendes Befestigungselement zur Verfügung gestellt und in das Sackloch eingetrieben wird, wobei das Dichtelement an das Loch in der Deckschicht angepresst wird. Bevorzugt wird das Befestigungselement in das Sackloch eingeschraubt.

Die Erfindung wird im Folgenden unter Bezugnahme auf die Zeichnungen näher erläutert. Es zeigen:
Fig. 1 einen Bohrer,
Fig. 2 ein Werkstück,
Fig. 3 eine Bohrmaschine mit einem Befestigungselement und
Fig. 4 ein Werkstück mit einem Dichtelement.

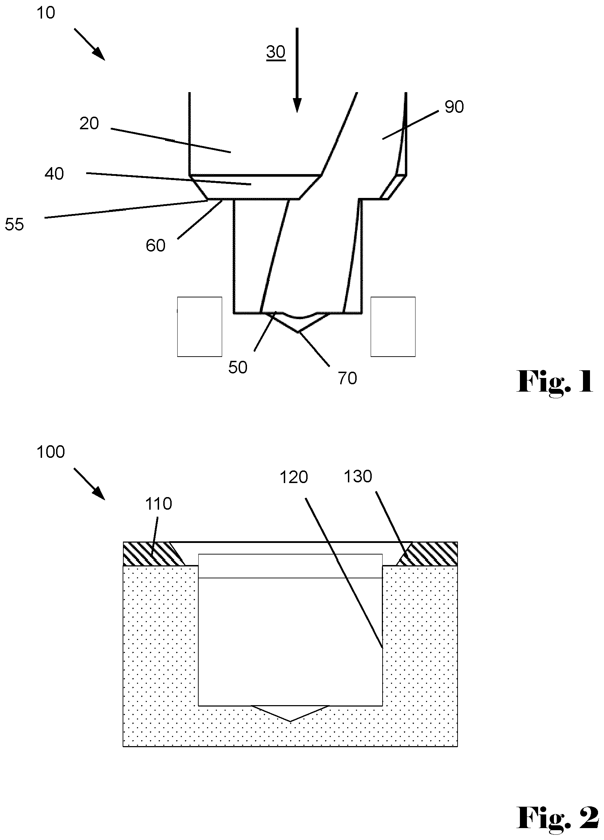

Figur 1 zeigt einen Bohrer 10, welcher sich zum handgeführten Bohren eines Sacklochs in ein nicht dargestelltes Werkstück aus Metall eignet, in einer Seitenansicht. Der Bohrer 10 umfasst einen Schaft 20, welcher eine Bohrrichtung 30 definiert und eine in der Bohrrichtung 30 orientierte Drehachse aufweist. An seinem in die Bohrrichtung 30 weisenden Ende weist der Schaft 20 eine Schneidkante 50 und eine nicht dargestellte weitere Schneidkante auf, welche in Bezug auf die Drehachse einander gegenüberliegend und symmetrisch angeordnet sind und durch Drehung um die Drehachse gemeinsam einen Sacklochdurchmesser des gebohrten Sacklochs definieren. Weiterhin weist der Schaft 20 eine Anschlagschulter 55 mit einer senkrecht zur Drehachse ausgerichteten und in die Bohrrichtung 30 weisenden Anschlagfläche 60 auf. Während des Bohrens des Sacklochs schlägt die Anschlagschulter 55 an einer Oberfläche des Werkstücks an, so dass der entgegen die Bohrrichtung 30 gemessene Abstand der Anschlagfläche 60 zur Schneidkante 50 eine Sacklochtiefe des gebohrten Sacklochs definiert. An seinem entgegen die Bohrrichtung 30 weisenden Ende weist der Schaft 20 ein nicht dargestelltes Einsteckende für eine vorübergehende Befestigung an einer handgeführten Bohrmaschine auf.

Der Schaft 20 weist einen sich entlang der Drehachse ändernden Hüllkreisdurchmesser auf. An der Anschlagschulter 55 ist der Hüllkreisdurchmesser grösser als der Sacklochdurchmesser. Weiterhin weist der Schaft 20 an seinem in die Bohrrichtung 30 weisenden Ende eine Zentrierspitze 70 auf, durch welche die Drehachse verläuft. Der gesamte Schaft 20 einschliesslich die Schneidkante 50 und die Zentrierspitze 70 ist aus einem Stück gebildet, so dass die Anschlagschulter 55 und die Schneidkante 50 aus demselben Material, bevorzugt einem Metall oder einer Legierung, besonders bevorzugt einem Stahl, bestehen.

Zur Abfuhr von Metallspänen, welche während des Bohrens von der Schneidkante 50 und der weiteren Schneidkante erzeugt werden, weist der Schaft 20 zwei spiralförmige Nuten 90 auf, welche sich durch die Anschlagschulter 55 hindurch erstrecken und von der Schneidkante 50 beziehungsweise von der weiteren Schneidkante begrenzt werden.

Der Schaft 20 weist einen sich entgegen die Bohrrichtung 30 an die Anschlagschulter 55 anschliessenden ersten Schaftabschnitt 40 auf, welcher bis an die Anschlagschulter 55 heranreicht und in welchem sich der Hüllkreisdurchmesser, ausgehend von der Anschlagschulter 55, entgegen die Bohrrichtung 30 stetig vergrössert. Der erste Schaftabschnitt weist eine konische Form mit einem Öffnungswinkel von 140° auf und erstreckt sich entlang der Drehachse über 2,5 mm.

Fig. 2 zeigt ein Werkstück 100 mit einer Deckschicht 110. Das Werkstück weist ein Sackloch 120 auf, welches beispielsweise mittels des Bohrers 10 aus Fig. 1 erzeugt wurde. Der erste Schaftabschnitt des Bohrers hat ein sich entgegen der Bohrrichtung vergrösserndes Loch 130 in der Deckschicht erzeugt.

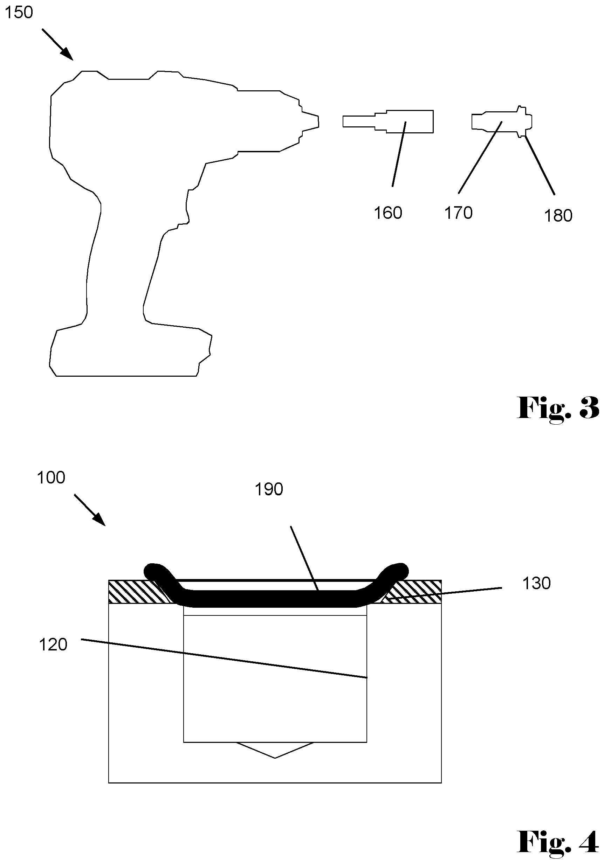

Fig. 3 zeigt eine Bohrmaschine 150 mit einem Bithalter 160 und einem Befestigungselement 170, welches ein als Dichtring ausgebildetes Dichtelement 180 aufweist und beispielsweise in das Sackloch 120 aus Fig. 2 eingetrieben wird.

Fig. 4 zeigt das Werkstück 100 mit der Deckschicht 110, nachdem ein Befestigungselement, von dem nur ein Dichtelement 190 dargestellt ist, in das Sackloch 120 eingetrieben wurde. Das Dichtelement 190 ist an das sich entgegen der Bohrrichtung vergrössernde Loch 130 in der Deckschicht gepresst. Aufgrund der konischen Form des Lochs 130 ist das Dichtelement 190 vor zu grosser Belastung geschützt.

Die Erfindung wurde anhand des Beispiels eines Metallbohrers beschrieben. Es wird jedoch darauf hingewiesen, dass der erfindungsgemässe Bohrer auch für andere Zwecke geeignet ist.

## Patentansprüche

1. Bohrer zum handgeführten Bohren eines Sacklochs mit einem Sacklochdurchmesser und einer Sacklochtiefe in ein Werkstück aus Metall, umfassend einen Schaft, welcher eine Bohrrichtung definiert und eine in der Bohrrichtung orientierte Drehachse aufweist, wobei der Schaft an seinem in die Bohrrichtung weisenden Ende eine Schneidkante und in einem die Sacklochtiefe definierenden und entgegen die Bohrrichtung gemessenen Abstand zur Schneidkante eine Anschlagschulter aufweist, wobei die Schneidkante durch Drehung um die Drehachse den Sacklochdurchmesser definiert, wobei der Schaft einen sich entlang der Drehachse ändernden Hüllkreisdurchmesser aufweist, welcher an der Anschlagschulter grösser als der Sacklochdurchmesser ist, wobei der Schaft einen sich entgegen die Bohrrichtung an die Anschlagschulter anschliessenden ersten Schaftabschnitt aufweist, welcher bis an die Anschlagschulter heranreicht und in welchem sich der Hüllkreisdurchmesser, ausgehend von der Anschlagschulter, entgegen die Bohrrichtung vergrössert.

2. Bohrer nach Anspruch 1, wobei sich der Hüllkreisdurchmesser in dem ersten Schaftabschnitt entgegen die Bohrrichtung stetig vergrössert.

3. Bohrer nach einem der vorhergehenden Ansprüche, wobei der erste Abschnitt eine konische Form aufweist.

4. Bohrer nach Anspruch 3, wobei ein Öffnungswinkel der konischen Form mindestens 60°, insbesondere mindestens 90°, insbesondere mindestens 120° beträgt.

5. Bohrer nach einem der vorhergehenden Ansprüche, wobei sich der erste Abschnitt entlang der Drehachse über mindestens 0,5 mm, insbesondere mindestens 1,0 mm, insbesondere mindestens 1,5 mm, insbesondere mindestens 2,0 mm erstreckt.

6. Bohrer nach einem der vorhergehenden Ansprüche, wobei der Schaft an seinem in die Bohrrichtung weisenden Ende eine Zentrierspitze aufweist, durch welche die Drehachse verläuft.

7. Bohrer nach einem der vorhergehenden Ansprüche, wobei die Anschlagschulter eine senkrecht zur Drehachse ausgerichtete und in die Bohrrichtung weisende Anschlagfläche aufweist.

8. Bohrer nach einem der vorhergehenden Ansprüche, wobei der Schaft an seinem entgegen die Bohrrichtung weisenden Ende einen Befestigungsabschnitt, insbesondere ein Einsteckende, für eine vorübergehende Befestigung an einer handgeführten Bohrmaschine aufweist.

9. Verfahren zum Befestigen eines Befestigungselements an einem Werkstück, aufweisend die folgenden Schritte:
- Zur-Verfügung-Stellen eines eine Deckschicht aufweisenden Werkstücks;
- Zur-Verfügung-Stellen eines Bohrers nach einem der vorhergehdenden Ansprüche;
- Bohren eines Sacklochs durch die Deckschicht hindurch in das Werkstück mittels des Bohrers, wobei der erste Schaftabschnitt des Bohrers ein sich entgegen der Bohrrichtung vergrösserndes Loch in der Deckschicht erzeugt;
- Zur-Verfügung-Stellen eines ein Dichtelement aufweisenden Befestigungselements;
- Eintreiben des Befestigungselements in das Sackloch, wobei das Dichtelement an das Loch in der Deckschicht angepresst wird.

10. Verfahren nach Anspruch 9, wobei das Eintreiben des Befestigungselements in das Sackloch ein Einschrauben des Befestigungselements in das Sackloch umfasst.
